# EUROPÄISCHE PATENTSCHRIFT

(11) **EP 1 294 806 B1**
(45) Veröffentlichungstag und Bekanntmachung des Hinweises auf die Patenterteilung: **14.04.2004**
(21) Anmeldenummer: 01945306.7
(22) Anmeldetag: 22.06.2001
(51) Int. Cl.: C08L 59/00

(54) **ANTISTATISCHE POLYOXYMETHYLENFORMMASSEN**
ANTISTATIC POLYOXYMETHYLENE MOLDING COMPOUNDS
MATIERES MOULABLES ANTISTATIQUES A BASE DE POLYOXYMETHYLENE

(30) Priorität: 29.06.2000 DE 10030632
(43) Veröffentlichungstag der Anmeldung: 26.03.2003
(73) Patentinhaber: BASF AKTIENGESELLSCHAFT, 67056 Ludwigshafen (DE)
(72) Erfinder: DAMES, Burkhardt, 64646 Heppenheim (DE); PELLKOFER, Erich, 67112 Mutterstadt (DE)
(86) Internationale Anmeldenummer: PCT/EP2001/007131
(87) Internationale Veröffentlichungsnummer: WO 2002/000790

(56) Entgegenhaltungen:
- DE-A- 2 539 408

## Beschreibung

Die Erfindung betrifft thermoplastische Formmassen, enthaltend mindestens
A) 10 bis 99,99 Gew. % mindestens eines Polyoxymethylen- homo- oder copolymerisates mindestens
B) 0,01 bis 5 Gew. % mindestens eines Polyethylenimin- homo- oder copolymerisates mindestens
C) 0,1 bis 15 Gew. % mindestens eines Polyalkylenglykols oder eines Polyalkylenglykolamins oder deren Mischungen
D) 0 bis 70 Gew. % weiterer Zusatzstoffe,
wobei die Summe der Gewichtsprozente der Komponenten A) bis D) stets 100 % ergibt.

Weiterhin betrifft die Erfindung die Verwendung der erfindungsgemäßen Formmassen zur Herstellung von Formkörpern jeglicher Art und die hierbei erhältlichen Formkörper jeglicher Art.

Ein Nachteil von vielen Polymeren liegt in ihrer starken elektrostatischen Aufladbarkeit. Einmal aufgebrachte Ladungen können wegen der geringen Leitfähigkeit nicht rasch genug abgeführt werden. Neben ästhetischen und gebrauchstechnischen Gründen erfordern jedoch vielfach Sicherheitsaspekte einen raschen Ladungsabfluss. Ist dieser nicht gewährleistet, so kann es zu Verschmutzung von Polymeroberflächen, Aufladung von Personen bei Kontakt mit Polymeren, und Funkenbildung durch starke Aufladungen mit nachfolgender Zündung von Staub- oder Lösungsmittel / Luft-Gemischen kommen.

Weitere Ausführungen zu antistatischen Additiven und dem Mechanismus der statischen Aufladung finden sich beispielsweise im "Plastics Additives Handbook", Herausgeber R. Gächler und H. Müller, Hanser Verlag, 3. Auflage, 1990, Seiten 749 - 775.

Die bekannten Stoffe zur Erhöhung der Volumenleitfähigkeit, beispielsweise Ruß oder Metallpulver, setzen jedoch die mechanischen Eigenschaften der Polymeren herab und sind für Anwendungen wie z. B. Verpackung von Mikrochips nicht verwendbar, da sich auf den empfindlichen Bauteilen Russ ablagern kann, wodurch dieses Bauteil irreversibel geschädigt würde.

Andere klassische Antistatika wie z. B. quartäre Ammoniumsalze schädigen Polyoxymethylen irreversibel.

EP-A 432 888 beschreibt als Antistatikum eine Mischung von Fettsäureestern mehrwertiger Alkohole und Polyethylenglycol bei gleichzeitigem Einsatz eines TPU. Dies führt zur Reduktion der Festigkeit, d. h. z. B. des E-Moduls und sonstiger mechanischen Eigenschaften.

Polyethylenimine als solche sind ebenfalls bekannt und werden bei der Papierherstellung verwendet: sie aggregieren die Papierfasern und binden störende Begleitstoffe, werden also als Aggregationsmittel und als Flockungs- bzw. Komplexierungsmittel verwendet, und verbessern die Naßfestigkeit des Papiers. Außerdem werden Polyethylenimine bei der Herstellung von Farben und Lacken und zur Wasserbehandlung verwendet, außerdem als Klebstoffschichten in laminierten Polypropylenmehrschichtfolien sowie bei der Erdölund Erdgasförderung, schließlich zur Immobilisierung von Enzymen. Siehe Ullmann's Encyclopedia of Industial Chemistry, 6. Aufl., 1999 Electronic Release, Verlag VCH Weinheim, Stichwort "Aziridines", Kap. 6 "Uses" (nachfolgend als "Ullmann Electronic Release" zitiert). Die Verwendung von Polyethyleniminen als Bestandteil von thermoplastischen Formmassen ist bisher nicht bekannt.

Aufgabe der vorliegenden Erfindung war es daher, antistatische thermoplastische POM-Formmassen zur Verfügung zu stellen, deren Farbeigenschaften, thermische Beständigkeit und mechanische Eigenschaften weitestgehend erhalten bleiben.

Demgemäß wurden die eingangs definierten Formmassen gefunden. Bevorzugte Ausführungsformen sind den Unteransprüchen zu entnehmen.

Als Komponente A) enthalten die erfindungsgemäßen Formmassen 10 bis 99,99, vorzugsweise 20 bis 98,95 Gew.-% und insbesondere 50 bis 97,95 Gew.-% eines Polyoxymethylenhomo- oder -copolymerisats.

Derartige Polymerisate sind dem Fachmann an sich bekannt und in der Literatur beschrieben.

Ganz allgemein weisen diese Polymere mindestens 50 mol-% an wiederkehrenden Einheiten -CH₂O- in der Polymerhauptkette auf.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung werden Polyoxymethylencopolymere als Komponente A bevorzugt, insbesondere solche, die neben den wiederkehrenden Einheiten -CH₂O- noch bis zu 50, vorzugsweise 0,1 bis 20, insbesondere 0,3 bis 10 mol-% und ganz besonders bevorzugt 2 bis 6 mol-% an wiederkehrenden Einheiten 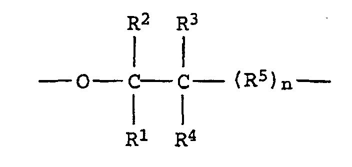 aufweisen, wobei R¹ bis R⁴ unabhängig voneinander ein Wasserstoffatom, eine C₁-bis C₄-Alkylgruppe oder eine halogensubstituierte Alkylgruppe mit 1 bis 4 C-Atomen und R⁵-eine -CH₂-, -CH₂O-, eine C₁-bis C₄-Alkyl- oder C₁-bis C₄-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel 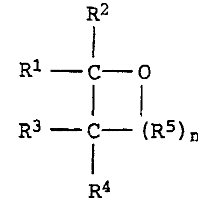 wobei R¹ bis R⁵ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie lineare Oligo- oder Polyformale wie Polydioxolan oder Polydioxepan als Comonomere genannt.

Als Komponente A) ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise bifunktionellen Verbindungen der Formel 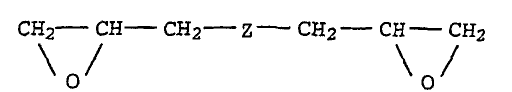 und/oder 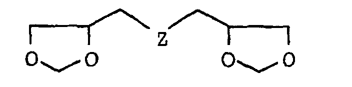 wobei Z eine chemische Bindung, -O-, -ORO- (R= C₁-bis C₈-Alkylen oder C₂-bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen Homo- und Copolymerisate sind dem Fachmann bekannt und in der Literatur beschrieben, so daß sich hier nähere Angaben erübrigen.

Die bevorzugten Polyoxymethylencopolymere haben Schmelzpunkte von mindestens 150°C und Molekulargewichte (Gewichtsmittelwert) M_{w} im Bereich von 5000 bis 200000, vorzugsweise von 7000 bis 150000.

Endgruppenstabilisierte Polyoxymethylenpolymerisate, die an den Kettenenden C-C-Bindungen aufweisen, werden besonders bevorzugt.

Die thermoplastischen Formmassen enthalten als Komponente B) erfindungsgemäß 0,01 bis 5 Gew.-% mindestes eines Polyethylenimin-Homopolymerisats oder -Copolymerisates. Bevorzugt beträgt der Anteil von B) 0,05 bis 1 Gew.-% und insbesondere 0,05 bis 0,5 Gew %.

Unter Polyethyleniminen im Sinne der vorliegenden Erfindung sollen sowohl Homo- als auch Copolymerisate verstanden werden, welche beispielsweise nach den Verfahren in Ullmann Electronic Release unter dem Stichwort "Aziridine" oder gemäß WO-A 94/12560 erhältlich sind.

Die Homopolymerisate sind im allgemeinen durch Polymerisation von Ethylenimin (Aziridin) in wäßriger oder organischer Lösung in Gegenwart von säureabspaltenden Verbindungen, Säuren oder LewisSäuren erhältlich. Derartige Homopolymerisate sind verzweigte Polymere, die in der Regel primäre, sekundäre und tertiäre Aminogruppen im Verhältnis von ca. 30 % zu 40 % zu 30 % enthalten. Die Verteilung der Aminogruppen kann im allgemeinen mittels ¹³C-NMR Spektroskopie bestimmt werden.

Als Comonomere werden vorzugsweise Verbindungen eingesetzt, welche mindestens zwei Aminofunktionen aufweisen. Als geeignete Comonomere seien beispielsweise Alkylendiamine mit 2 bis 10 C-Atomen im Alkylenrest genannt, wobei Ethylendiamin und Propylendiamin bevorzugt sind. Weiterhin geeignete Comonomere sind Diethylentriamin, Triethylentetramin, Tetraethylenpentamin, Dipropylentriamin, Tripropylentetramin, Dihexamethylentriamin, Aminopropylethylendiamin und Bisaminopropylethylendiamin.

Polyethylenimine weisen üblicherweise ein mittleres Molekulargewicht (Gewichtsmittel) von 100 bis 3.00-0.000, vorzugsweise von 800 bis 2.000.000 auf (bestimmt mittels Lichtstreuung). Die Viskosität gemäß ISO 2555 (bei 20°C) liegt im allgemeinen im Bereich von 100 bis 200.000 mPas, vorzugsweise von 1000 bis 100.000 mPas.

Darüber hinaus eignen sich vernetzte Polyethylenimine, die durch Reaktion von Polyethyleniminen mit bi- oder polyfunktionellen Vernetzern erhältlich sind, welche als funktionelle Gruppe mindestens eine Halogenhydrin-, Glycidyl-, Aziridin-, Isocyanateinheit oder ein Halogenatom aufweisen. Als Beispiele seinen Epichlorhydrin oder Bischlorhydrinether von Polyalkylenglykolen mit 2 bis 100 Ethylenoxid- und/oder Propylenoxid-Einheiten sowie die in der DE-A 19 93 17 20 und US 4 144 123 aufgeführten Verbindungen genannt. Verfahren zur Herstellung von vernetzten Polyethyleniminen sind u.a. aus den o.g. Schriften sowie EP-A 895 521 und EP-A 25 515 bekannt.

Weiterhin sind gepfropfte Polyethylenimine geeignet, wobei als Pfroprmittel sämtliche Verbindungen eingesetzt werden können, die mit den Amino- bzw. Iminogruppen der Polyethylenimine reagieren können. Geeignete Pfropfmittel und Verfahren zur Herstellung von gepfropften Polyethyleniminen sind beispielsweise der EP-A 675 914 zu entnehmen.

Ebenso geeignete Polyethylenimine im Sinne der Erfindung sind amidierte Polymerisate, die üblicherweise durch Umsetzung von Polyethyleniminen mit Carbonsäuren, deren Ester oder Anhydride, Carbonsäureamide oder Carbonsäurehalogenide erhältlich sind. Je nach Anteil der amidierten Stickstoffatome in der Polyethyleniminkette können die amidierten Polymerisate nachträglich mit den genannten Vernetzern vernetzt werden. Vorzugsweise werden hierbei bis zu 30 % der Aminofunktionen amidiert, damit für eine anschließende Vernetzungsreaktion noch genügend primäre und/oder sekundäre Stickstoffatome zur Verfügung stehen.

Außerdem eignen sich alkoxylierte Polyethylenimine, die beispielsweise durch Umsetzung von Polyethylenimin mit Ethylenoxid und/oder Propylenoxid erhältlich sind. Auch derartige aloxylierte Polymerisate sind anschließend vernetzbar.

Als weitere geeignete erfindungsgemäße Polyethylenimine seien hydroxylgruppenhaltige Polyethylenimine und amphotere Polyethylenimine (Einbau von anionischen Gruppen) genannt sowie lipophile Polyethylenimine, die in der Regel durch Einbau langkettiger Kohlenwasserstoffreste in die Polymerkette erhalten werden. Verfahren zur Herstellung derartiger Polyethylenimine sind dem Fachmann bekannt, so daß sich weitere Einzelheiten hierzu erübrigen.

Als Komponente C) enthalten die erfindungsgemäßen Formmassen 0,1 bis 15, bevorzugt 1 bis 8 und insbesondere 2 bis 6 Gew % mindestens eines Polyalkylenglycols oder eines Polyalkylenglycolamins oder deren Mischungen. Bevorzugte Polyalkylenglycole sind solche der Formel I 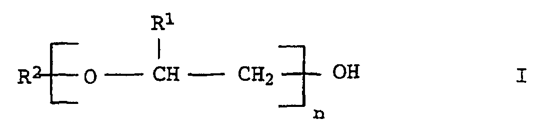 in der
- R¹: Wasserstoff oder einen Alkylrest mit 1 bis 4 C-Atomen, vorzugsweise Wasserstoff und/oder Methylrest
- R²: Wasserstoff oder einen Alkylrest mit 1 bis 4 C-Atomen, vorzugsweise Wasserstoff und/oder Methylrest
und
- n: größer 2, vorzugsweise größer 30
bedeuten.

Bevorzugte Polyproylenglykole sind in der Regel durch Polyaddition von Propylenoxid an Wasser bzw. 1,2 Propandiol erhältich; Polyethylenglykole durch basisch katalysierte Polyaddition von Ethylenoxid in meist geringe Mengen Wasser enthaltenden Systemen mit Ethylenglycol als Starter.

Im weiteren Sinne werden auch Produkte mit n=2-4 (Di-, Tri- und Tetramethylenglykol bzw. Di-, Tri-, und Tetrapropylenglykole zu den Polyalkylenglykolen gerechnet (siehe Römmpps Chemie-Lexikon).

Unter Polyethylenglykolen im Sinne der vorliegenden Erfindung sollen auch Alkyl-Ethylenoxid/Propylenoxid Block-Copolymere verstanden werden, wobei die Blöcke unterschiedlich angeordnet sein können, z. B. A-B-A, B-A-B oder nur 2 Blöcke A-B. Die Festlegung der Blockstruktur erfolgt durch die Reihenfolge der Monomerzugabe.

Die Polyalkylenglykole weisen im allgemeinen OH-Zahlen gemäß DIN 53240 von 0,022 bis 620, vorzugsweise von 1 bis 170 mg KOH/g.

Dies entspricht üblicherweise einer mittleren molaren Masse (Mₙ) von 180 bis 5 000 000 g/mol, vorzugsweise von 660 bis 112 200 g/mol.

Bevorzugte Polyethylenglykole weisen ein (Mₙ) von 180 bis 50 000, bevorzugt von 500 bis 25 000 oder eine OH-Zahl von 624 bis 2,2, bevorzugt von 224 bis 4,5 auf.

Bevorzugte Polyalkylenglykolamine sind in der Regel durch reduktive Aminierung von Polyalkylenglykolen erhältlich. Diese weisen üblicherweise eine Amin-Zahl von 0,5 bis 200, vorzugsweise von 1 bis 150 mg KOH/g gemäß DIN 53240 auf, entsprechend einem mitleren Molekulargewicht (Mₙ) von 112 200 bis 281, bevorzugt von 56 100 bis 374 berechnet aus der Aminzahl.

Als Komponente D) können die erfindungsgemäßen Formmassen 0 bis 70, vorzugsweise 0 bis 30 Gew.-% weiterer Zusatzstoffe enthalten.

Als sterisch gehinderte Phenole D) eignen sich prinzipiell alle Verbindungen mit phenolischer Struktur, die am phenolischen Ring mindestens eine sterisch anspruchsvolle Gruppe aufweisen.

Vorzugsweise kommen z.B. Verbindungen der Formel 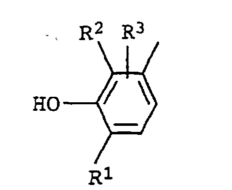 in Betracht, in der bedeuten:
R¹ und R² eine Alkylgruppe, eine substituierte Alkylgruppe oder eine substituierte Triazolgruppe, wobei die Reste R¹ und R² gleich oder verschieden sein können und R³ eine Alkylgruppe, eine substituierte Alkylgruppe, eine Alkoxigruppe oder eine substituierte Aminogruppe.

Antioxidantien der genannten Art werden beispielsweise in der DE-A 27 02 661 (US-A 4 360 617) beschrieben.

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel 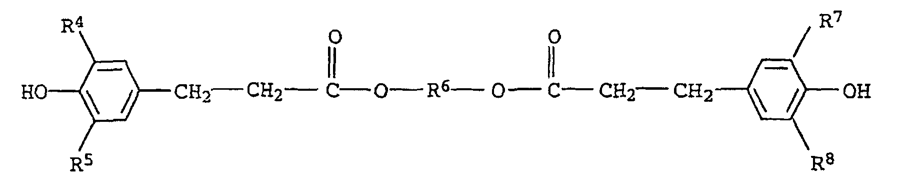 wobei R⁴, R⁵, R⁷ und R⁸ unabhängig voneinander C₁-C₈-Alkylgruppen darstellen, die ihrerseits substituiert sein können (mindestens eine davon ist eine sterisch anspruchsvolle Gruppe) und R⁶ einen zweiwertigen aliphatischen Rest mit 1 bis 10 C-Atomen bedeutet, der in der Hauptkette auch C-O-Bindungen aufweisen kann.

Bevorzugte Verbindungen, die dieser Formen entsprechen, sind 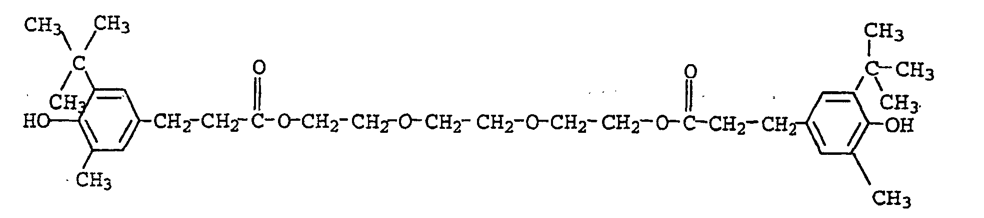 (Irganox® 245 der Firma Ciba-Geigy) 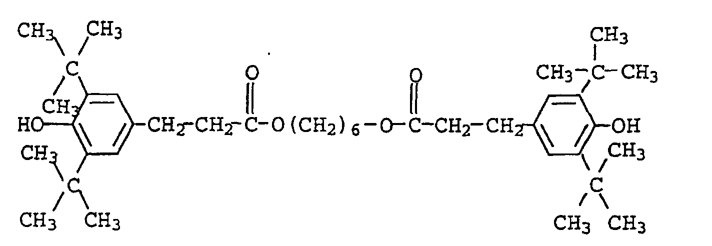 (Irganox® 259 der Firma Ciba-Geigy)

Beispielhaft genannt seien insgesamt als sterisch gehinderte Phenole:

2,2'-Methylen-bis-(4-methyl-6-tert.-butylphenol), 1,6-Hexandiolbis[3-(3,5-di-tert.-butyl-4-hydroxyphenyl)-propionat], Pentaerythril-tetrakis-[3-(3,5-di-tert.-butyl-4-hydroxyphenyl)-propionat], Distraryl-3,5-di-tert.-butyl-4-hydroxybenzylphosphonat, 2,6,7-Trioxa-1-phosphabicyclo-[2.2.2]oct-4-yl-methyl-3,5-ditert.-butyl-4-hydroxyhydrocinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-ditert.-butyl-4-hydroxybenzyl)-benzol, 4,4'-Methylen-bis-(2,6-ditert.-butylphenol), 3,5-Di-tert.-butyl-4-hydroxybenzyl-dimethylamin und N,N'-Hexamethylen-bis-3,5-di-tert.-butyl-4-hydroxyhydrocinnamid.

Als besonders wirksam erwiesen haben sich und daher vorzugsweise verwendet werden 2,2'-Methylen-bis-(4-methyl-6-tert.-butylphenyl), 1,6-Hexandiol-bis-(3,5-di-tert.-butyl-4-hydroxyphenyl]-propionat (Irganox® 259), Pentaerythrityl-tetrakis-[3-(3,5-di-tert.-butyl-4-hydroxyphenyl)-propionat] und das vorstehend beschriebene Irganox® 245 der Firma Ciba Geigy, das besonders gut geeignet ist.

Die Antioxidantien (D), die einzeln oder als Gemische eingesetzt werden können, sind üblicherweise in einer Menge bis zu 2 Gew.-%, vorzugsweise von 0,005 bis 2 Gew.-%, insbesondere 0,1 bis 1 Gew.-%, bezogen auf das Gesamtgewicht der Formmassen A) bis C) enthalten.

In manchen Fällen haben sich sterisch gehinderte Phenole mit nicht mehr als einer sterisch gehinderten Gruppe in ortho-Stellung zur phenolischen Hydroxygruppe als besonders vorteilhaft erwiesen; insbesondere bei der Beurteilung der Farbstabilität bei Lagerung in diffusem Licht über längere Zeiträume.

Die als Komponenten D) verwendbaren Polyamide sind an sich bekannt. Halbkristalline oder amorphe Harze, wie sie z.B. in der Encyclopedia of Polymer Science and Engineering, Vol. 11, S. 315 bis 489, John Wiley & Sons, Inc., 1988, beschreiben werden, können eingesetzt werden, wobei der Schmelzpunkt des Polyamids vorzugsweise unter 225°C, vorzugsweise unter 215°C liegt.

Beispiele hierfür sind Polyhexamethylenazelainsäureamid, Polyhexamethylensebacinsäureamid, Polyhexamethylendodekandisäureamid, Poly-11-aminoundekansäureamid und Bis-(p-aminocyclohexyl)-methandodekansäurediamid oder die durch Ringöffnung von Lactamen, z.B. oder Polylaurinlactam erhaltenen Produkte. Auch Polyamide auf der Basis von Terephthal- oder Isophthalsäure als Säurekomponente und/oder Trimethylhexamethylendiamin oder Bis-(p-aminocyclohexyl)-propan als Diaminkomponente sowie Polyamidgrundharze, die durch Copolymerisation zweier oder mehrerer der vorgenannten Polymeren oder deren Komponenten hergestellt worden sind, sind geeignet.

Als besonders geeignete Polyamide seien Mischpolyamide auf der Grundlage von Caprolactam, Hexamethylendiamin, p,p'-Diaminodicyclohexylmethan und Adipinsäure genannt. Ein Beispiel hierfür ist das unter der Bezeichnung Ultramid® 1 C von der BASF Aktiengesellschaft vertriebene Produkt.

Weitere geeignete Polyamide werden von der Firma Du Pont unter der Bezeichnung Elvamide® vertrieben.

Die Herstellung dieser Polyamide wird ebenfalls in der vorgenannten Schrift beschrieben. Das Verhältnis von endständigen Aminogruppen zu endständigen Säuregruppen kann durch Variation des Molverhältnisses der Ausgangsverbindungen gesteuert werden.

Der Anteil des Polyamids in der erfindungsgemäßen Formmasse beträgt bis zu 2 Gew.-%, vorzugsweise 0,005 bis 1,99 Gew.-%, bevorzugt 0,01 bis 0,08 Gew.-%.

Durch die Mitverwendung eines Polykondensationsprodukts aus 2,2-Di-(4-hydroxyphenyl)propan (Bisphenol A) und Epichlorhydrin kann in manchen Fällen die Dispergierbarkeit der verwendeten Polyamide verbessert werden.

Derartige Kondensationsprodukte aus Epichlorhydrin und Bisphenol A sind kommerziell erhältlich. Verfahren zu deren Herstellung sind dem Fachmann ebenfalls bekannt. Handelsbezeichnungen der Polykondensate sind Phenoxy® (der Union Carbide Corporation) bzw. Epikote® (Firma Shell). Das Molekulargewicht der Polykondensate kann in weiten Grenzen variieren; prinzipiell sind die im Handel erhältlichen Typen sämtlich geeignet.

Als weitere Stabilisatoren können die erfindungsgemäßen Polyoximethylen-Formmassen bis zu 2,0 Gew.-%, vorzugsweise 0,005 bis 0,5 Gew.-% und insbesondere 0,01 bis 0,3 Gew.-%, bezogen auf das Gesamtgewicht der Formmassen eines oder mehrerer Erdalkalisilikate und/oder Erdalkaliglycerophosphate enthalten. Als Erdalkalimetalle zur Bildung der Silikate und Glyoerophosphate haben sich vorzugsweise Calcium und insbesondere Magnesium vorzüglich bewährt. Anwendung finden zweckmäßigerweise Calciumglycerophosphat und vorzugsweise Magnesiumglycerophosphat und/oder Calciumsilikat und vorzugsweise Magnesiumsilikat, wobei als Erdalkalisilikate, insbesondere solche bevorzugt sind, die durch die Formel

Me · x SiO₂ · n H₂O

beschrieben werden, in der bedeuten
- Me: ein Erdalkalimetall, vorzugsweise Calcium oder insbesondere Magnesium,
- x: eine Zahl von 1,4 bis 10, vorzugsweise 1,4 bis 6 und
- n: eine Zahl gleich oder größer als 0, vorzugsweise 0 bis 8.

Die Verbindungen werden vorteilhafterweise in feingemahlener Form eingesetzt. Produkte mit einer durchschnittlichen Teilchengröße von kleiner als 100 µm, vorzugsweise von kleiner als 50 µm sind besonders gut geeignet.

Vorzugsweise Anwendung finden Calcium- und Magnesiumsilikate und/oder Calcium- und Magnesiumglycerophosphate. Diese können beispielsweise durch die folgenden Kenndaten näher spezifiziert werden:
Calcium- bzw.- Magnesiumsilikat:
   Gehalt an CaO bzw. MgO: 4 bis 32 Gew.-%, vorzugsweise 8 bis 30 Gew.-% und insbesondere 12 bis 25 Gew.-%,
   Verhältnis SiO₂ : CaO bzw. SiO₂ : MgO (mol/mol) : 1,4 bis 10, vorzugsweise 1,4 bis 6 und insbesondere 1,5 bis 4,
   Schüttgewicht: 10 bis 80 g/100 ml, vorzugsweise 10 bis 40 g/100 ml und durchschnittliche Kenngröße: kleiner als 100 µm, vorzugsweise kleiner als 50 µm und
Calcium- bzw. Magnesiumglycerophosphate:
   Gehalt an CaO bzw. MgO: größer als 70 Gew.-%, vorzugsweise größer als 80 Gew.-%
   Glührückstand: 45 bis 65 Gew.-%
   Schmelzpunkt: größer als 300°C und
   durchschnittliche Korngröße: kleiner als 100 µm, vorzugsweise kleiner als 50 µm.

Als bevorzugte Schmiermittel D) können die erfindungsgemäßen Formmassen bis zu 5, vorzugsweise 0,09 bis 2 und insbesondere 0,1 bis 0,7 mindestens eines Esters oder Amids gesättigter oder ungesättigter aliphatischer Carbonsäuren mit 10 bis 40 C-Atomen bevorzugt 16 bis 22 C-Atomen mit Polyolen oder aliphatischen gesättigten Alkoholen oder Aminen mit 2 bis 40 C-Atomen bevorzugt 2 bis 6 C-Atomen oder einem Ether, der sich von Alkoholen und Ethylenoxid ableitet, enthalten.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung aus Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Weiterhin geeignet sind Polyetherpolyole oder Polyesterpolyole, welche mit ein- oder mehrwertigen Carbonsäuren, vorzugsweise Fettsäuren verestert bzw. verethert sind. Geeignete Produkte sind im Handel beispielsweise als Loxiol® EP 728 der Firma Henkel KGaA erhältlich.

Bevorzugte Ether, welche sich von Alkoholen und Ethylenoxid ableiten, weisen die allgemeine Formel

RO (CH₂ CH₂ O)ₙ H

auf, in der R eine Alkylgruppe mit 6 bis 40 Kohlenstoffatomen und n eine ganze Zahl größer/gleich 1 bedeutet.
Insbesondere bevorzugt für R ist ein gesättigter C₁₆ bis C₁₈ Fettalkohol mit n ≈ 50, welcher als Lutensol® AT 50 der Firma BASF im Handel erhältlich ist.

Die erfindungsgemäßen Formmassen können 0 bis 5, bevorzugt 0,001 bis 5 Gew.-%, vorzugsweise 0,01 bis 3 Gew.-% und insbesondere 0,05 bis 1 Gew.-% eines Melamin-Formaldehyd-Kondensates enthalten. Vorzugsweise ist dieses ein Fällungskondensat in feinteiliger Form, welches vernetzt und wasserunlöslich ist. Das Molverhältnis Formaldehyd zu Melamin beträgt vorzugsweise 1,2:1 bis 10:1, insbesondere 1,2:1 bis 2:1. Aufbau und Verfahren zur Herstellung derartiger Kondensate sind der DE-A 25 40 207 zu entnehmen.

Als Komponente D) können die erfindungsgemäßen Formmassen 0,0001 bis 1 Gew.-%, vorzugsweise 0,001 bis 0,8 Gew.-% und insbesondere 0,01 bis 0,3 Gew.-% eines Nukleierungsmittels enthalten.

Als Nukleierungsmittel kommen alle bekannten Verbindungen in Frage, beispielsweise Melamincyanurat, Borverbindungen wie Borhitrid, Kieselsäure, Pigmente wie z.B. Heliogenblau® (Kupferphtalocyaninpigment; eingetragenes Warenzeichen der BASF Aktiengesellschaft) oder verzweigte Polyoxymethylene, welche in diesen geringen Mengen eine nukleierende Wirkung zeigen.

Insbesondere wird als Nukleierungsmittel Talkum verwendet, welches ein hydratisiertes Magnesiumsilikat der Zusammensetzung Mg₃[(OH)₂/Si₄O₁₀] oder MgO · 4 SiO₂ · H₂O ist. Diese sogenannten Drei-Schicht-Phyllosilikate weisen einen triklinen, monoklinen oder rhombischen Kristallaufbau auf mit blättchenförmigem Erscheinungsbild. An weiteren Spurenelementen können Mn, Ti, Cr, Ni, Na, und K anwesend sein, wobei die OH-Gruppe teilweise durch Fluorid ersetzt sein kann.

Besonders bevorzugt wird Talkum eingesetzt, dessen Teilchengrößen zu 100 % < 20 µm beträgt. Die Teilchengrößenverteilung wird üblicherweise durch Sedimentationsanalyse bestimmt und beträgt vorzugsweise:
< 20 µm 100 Gew.-%
< 10 µm 99 Gew.-%
< 5 µm 85 Gew.-%
< 3 µm 60 Gew.-%
< 2 µm 43 Gew.-%

Derartige Produkte sind im Handel als Micro-Talc I.T. extra (Fa. Norwegian Talc Minerals) erhältlich.

Als Füllstoffe in Mengen bis zu 50 Gew.-%, vorzugsweise 5 bis 40 Gew.-% seien beispielsweise Kaliumtitanat-Whisker, Kohlenstoff- und vorzugsweise Glasfasern genannt, wobei die Glasfasern z.B. in Form von Glasgeweben, -matten, -vliesen und/oder Glasseidenrovings oder geschnittener Glasseide aus alkaliarmem E-Glas mit einem Durchmesser von 5 bis 200 µm, vorzugsweise 8 bis 50 µm eingesetzt werden können, wobei die faserförmigen Füllstoffe nach ihrer Einarbeitung vorzugsweise eine mittlere Länge von 0,05 bis 1 µm, insbesondere 0,1 bis 0,5 µm aufweisen.

Andere geeignete Füllstoffe sind beispielsweise Calciumcarbonat oder Glaskugeln, vorzugsweise in gemahlener Form oder Mischungen dieser Füllstoffe.

Als weitere Zusatzstoffe seien, in Mengen bis zu 50, vorzugsweise 0 bis 40 Gew.-%, schlagzäh modifizierende Polymere (im folgenden auch als kautschukelastische Polymerisate oder Elastomere bezeichnet) genannt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyltricyclo(5.2.1.0.2.6)-3,8-decadien oder deren Mischungen genannt. Bevorzugt werden Hexa-1,5-dien-5-Ethyliden-norbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

Die EPDM-Kautschuke können auch mit weiteren Monomeren gepfropft sein, z.B. mit Glycidyl(meth)acrylaten, (Meth)acrylsäureestern und (Meth)acrylamiden.

Eine weitere Gruppe bevorzugter Kautschuke sind Copolymere des Ethylens mit Estern von (Meth)acrylsäure. Zusätzlich können die Kautschuke noch Epoxy-Gruppen enthaltende Monomere enthalten. Diese Epoxygruppen enthaltende Monomere werden vorzugsweise durch Zugabe Epoxygruppen enthaltenden Monomeren der allgemeinen Formeln I oder II zum Monomerengemisch in den Kautschuk eingebaut 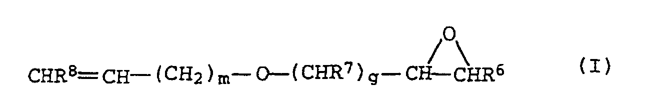 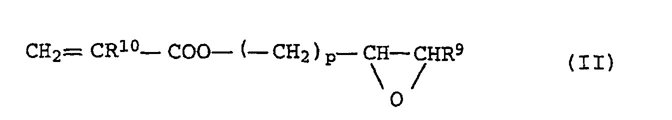 wobei R⁶ - R¹⁰ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R⁶ bis R⁸ Wasserstoff, wobei m für 0 oder 1 und g für 1 steht. Die entsprechenden Verbindungen sind Allylglycidylether und Vinylglycidylether.

Bevorzugte Verbindungen der Formel II sind Epoxygruppen-enthaltende Ester der Acrylsäure und/oder Methacrylsäure, wie Glycidylacrylat und Glycidylmethacrylat.

Vorteilhaft bestehen die Copolymeren aus 50 bis 98 Gew.-% Ethylen, 0 bis 20 Gew.-% Epoxygruppen enthaltenden Monomeren sowie der restlichen Menge an (Meth)acrylsäureestern.

Besonders bevorzugt sind Copolymerisate aus
- 50 bis 98,: insbesondere 55 bis 95 Gew.-% Ethylen, insbesondere 0,3 bis 20 Gew.-% Glycidylacrylat und/oder
- 0 bis 40,: insbesondere 0,1 bis 20 Gew.-% Glycidylmethacrylat, und
- 1 bis 50,: insbesondere 10 bis 40 Gew.-% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalystoren sind an sich bekannt.

Grundsätzlich können homogen aufgebaute Elastomere oder aber solche mit einem Schalenaufbau eingesetzt werden. Der schalenartige Aufbau wird u.a. durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Aminooder Amidgruppen sowie funktionelle Gruppen, die durch Mitverwendung von Monomeren der allgemeinen Formel 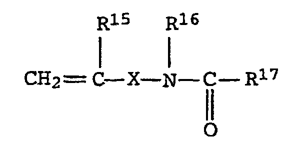 eingeführt werden können,
wobei die Substituenten folgende Bedeutung haben können:
- R¹⁵: Wasserstoff oder eine C₁- bis C₄-Alkylgruppe,
- R¹⁶: Wasserstoff, eine C₁- bis C₈-Alkylgruppe oder eine Arylgruppe, insbesondere Phenyl,
- R¹⁷: Wasserstoff, eine C₁- bis C₁₀-Alkyl-, eine C₆- bis C₁₂-Arylgruppe oder -OR₁₈
- R¹⁸: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe oder

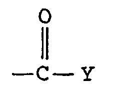

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)ethylmethacrylat, (N,N-Dimethylamino)ethylacrylat, (N,N-Dimethylamino)methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat, Butandioldiacrylat und Dihydrodicyclo- pentadienylacrylat sowie die in der EP-A 50 265 beschriebenen Verbindungen.

Ferner können auch sogenannte pfropfvernetzende Monomere (graftlinking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomeren; für nähere Einzelheiten sei hier beispielsweise auf die US-PS 4 148 846 verwiesen.

Im allgemeinen beträgt der Anteil dieser vernetzenden Monomeren an der Komponente D) bis zu 5 Gew.-%, vorzugsweise nicht mehr als 3 Gew.-%, bezogen auf D).

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Monomere für den Kern | Monomere für die Hülle |
|---|---|
| Buta-1,3-dien, Isopren, n-Butylacrylat, Ethylhexylacrylat oder deren Mischungen, ggf. zusammen mit vernetzenden Monomeren | Styrol, Acrylnitril, (Meth)acrylate, gegebenenfalls mit reaktiven Gruppen wie hierin beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Die beschriebenen Elastomere D) können auch nach anderen üblichen Verfahren, z.B. durch Suspensionspolymerisation, hergestellt werden.

Als weitere geeignete Elastomere seien thermoplastische Polyurethane genannt, wie sie beispielsweise in der EP-A 115 846 und EP-A 115 847 sowie EP-A 117 664 beschrieben sind.

Selbstverständlich können auch Mischungen der vorstehend aufgeführten Kautschuktypen eingesetzt werden.

Die erfindungsgemäßen Formmassen können noch weitere übliche Zusatzstoffe und Verarbeitungshilfsmittel enthalten. Nur beispielhaft seien hier Zusätze zum Abfangen von Formaldehyd (Formaldehyd-Scavenger), Weichmacher, Haftvermittler und Pigmente genannt. Der Anteil solcher Zusätze liegt im allgemeinen im Bereich von 0,001 bis 5 Gew.-%.

Als Komponente D) können die erfindungsgemäßen Formmassen bezogen auf das Gesamtgewicht der Komponenten A) bis D) 0 bis 2, vorzugsweise 10 ppm bis 1,5 und insbesondere 0,001 bis 1 Gew.-% einer Alkali- und/oder Erdalkaliverbindung enthalten.

Es können allgemein alle Erdalkali- und/oder Alkalimetallkationen verwendet werden, wobei Lithium-, Natrium-, Kalium- und Calcium-Kationen bevorzugt sind.

Unter Alkali- und/oder Erdalkaliverbindungen sollen erfindungsgemäß solche anorganischen oder organischen Salze verstanden werden, welche in wäßriger Lösung oder Suspensionen alkalisch reagieren.

Als anorganische Salze seien beispielsweise Carbonate, Hydrogencarbonate, Hydroxide, Oxide oder Phosphate genannt, wobei Alkalicarbonate wie Kaliumcarbonat und Natriumcarbonat besonders bevorzugt sind.

Organische Salze sind z.B. Alkoholate von C₂-bis C₁₂ Alkoholen, Phenolate oder Salze von Carbonsäuren mit 2 bis 12 C-Atomen, wobei Citrate, Oxalate oder Tartrate besonders bevorzugt sind.

Besonders bevorzugt sind Alkalihydroxide, insbesondere Kaliumhydroxid und Natriumhydroxid, welche vorzugsweise in Form einer wäßrigen 10 bis 70 %igen Lösung, vorzugsweise 40 bis 60 %ig bei der Herstellung der POM-Formmassen zugegeben werden, wobei die Dosierung gemeinsam mit dem Ruß erfolgen kann.

Die Herstellung der erfindungsgemäßen thermoplastischen Formmassen erfolgt durch Mischen der Komponenten in an sich bekannter Weise, weshalb sich hier detaillierte Angaben erübrigen. Vorteilhaft erfolgt die Mischung der Komponenten auf einem Extruder.

Die Komponente B) sowie gegebenenfalls die Komponente(n) C) und D) können in einer bevorzugten Herstellungsform vorzugsweise bei Raumtemperaturen auf das Granulat von A) aufgebracht und anschließend extrudiert werden.

In einer weiteren bevorzugten Ausführungsform erfolgt die Zugabe von B) in die Thermoplastschmelze A) mittels einer Lösung, vorzugsweise wässriger Lösung. Diese weist üblicherweise einen Feststoffgehalt von 0,005 bis 5 bevorzugt von 0,1 bis 1 % auf.

Die erfindungsgemäßen thermoplastischen Formmassen zeichnen sich durch ein ausgewogenes Eigenschaftsspektrum sowie geringe antistatische Aufladung aus und zeigen eine sehr gute thermische Beständigkeit, welche bei der Verarbeitung geringen Formbelag, Verfärbungen und Formaldehydemission zeigen. Daher eignen sich derartige Formteile insbesondere zur Anwendung als Formkörper wie Kettenglieder, Gleitrollen, Gleitschienen oder Zahnräder.

### Beispiele

Es wurden folgende Komponenten eingesetzt:

### Komponente A)

Polyoxymethylencopolymerisat aus 97,3 Gew.-% Trioxan und 2,7 Gew.-% Butändiolformal. Das Produkt enthielt noch ungefähr 3 Gew.-% nicht umgesetztes Trioxan und 5 Gew.-% thermisch instabile Anteile. Nach Abbau der thermisch instabilen Anteile hatte das Copolymer einen MVR von 2,2 ml/10 min (190°C, 2,16 kg, nach ISO 1133/B)

### Komponente B)

Polyethylenimin mit einer mittleren Molmasse (M_{w}) - bestimmt durch Lichtstreuung - von 35.000 und einer Viskosität gemäß ISO 2555 bei 20 °C von 14.000 MPas.

### Komponente C).

Polyethylenglycol mit einer mittleren Molmasse (Mₙ) von 12.000 und einer OH-Zahl gemäß DIN 53240 von 9,35 mg KOH/g.

### Komponenten D

D/1 Irganox® 245 der Firma Ciba Geigy: 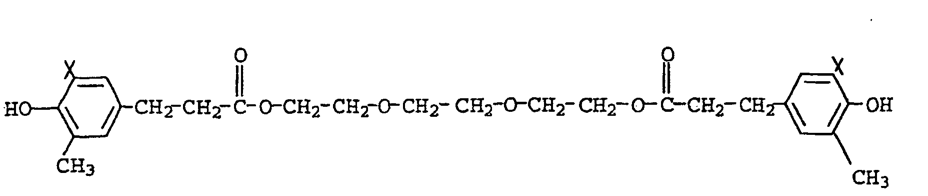
D/2 Polyamid-Oligomeres mit einem Molekulargewicht von etwa 3000, hergestellt aus Caprolactam, Hexamethylendiamin, Adipinsäure und Propionsäure (als Molekulargewichtsregler) in Anlehnung an die Beispiele 5-4 der US-A 3 960 984 ("PA-dicapped").
D/3 Synthetisches Mg-Silicat (Ambosol® Firma Societe Nobel, Puteaux) mit folgenden Eigenschaften:
   - Gehalt an MgO: ≥ 14,8 Gew.-%
   - Gehalt an SiO2: ≥ 59 Gew.-%
   - Verhältnis Sio2:MgO: 2,7 mol/mol
   - Schüttdichte: 20 bis 30 g/100m
   - Glühverlust:: < 25 Gew.-%
D/4 Ein Melamin-Formaldehyd-Kondensat gemäß Beispiel 1 der DE-A 25 40 207.
   Zur Herstellung der Formmassen wurde die Komponente A mit den in der Tabelle angegebenen Mengen der Komponenten B bis D in einem Trockenmischer bei einer Temperatur von 23°C gemischt.
   Die so erhaltene Mischung wurde in einem Doppelschneckenextruder mit Entgasungsvorrichtung eingebracht, bei 230°C homogenisiert, entgast und das homogenisierte Gemisch durch eine Düse als Strang ausgepreßt und granuliert.
   Zur Prüfung der Thermostabilität wurden bestimmt:
   - GV N₂:: Der Gewichtsverlust in Prozent-einer Probe aus 1,2 g Granulat bei 2-stündigem Erhitzen auf 220°C unter Stickstoff,
   - GV Luft:: Gewichtsverlust in Prozent einer Probe aus 1,2 g Granulat bei 2-stündigem Erhitzen auf 220°C unter Luft.

Die antistatischen Eigenschaften wurden durch den Corona-Test bestimmt: W. Hübler, Elektrotechnik 53, Heft 15/16 (1971) S. 10 - 15: Bestimmung des elektrostatischen Verhaltens durch berührungsloses Aufladen. Die Bestimmung des Oberflächenwiderstandes erfolgte nach DIN VDE 0303 T.3 (früher DIN 53482).

Die Messungen erfolgten nach drei Tagen Lagerung im Normalklima 23/50 (23°C/50 % Luftfeuchte). Dabei bedeuten;
- Delta E:: Abfall der Ladung in %
- R_{OA}:: Oberflächenwiderstand gemessen mit Elektrodenanordnung A (100mm*10mm)

Unter Komponente A) in den folgenden Tabellen wird A) enthaltend jeweils 0,35 Gew % D/1; 0,04 Gew % D/2; 0,05 Gew % D/3 und 0,2 Gew % D/4 verstanden.

Die Zusammensetzungen der Formmassen und die Ergebnisse der Messungen sind den Tabellen 1 bis 3 zu entnehmen.

**Tabelle 1**

| Beispiel | | 1 V | 1 | 2 | 3 |
|---|---|---|---|---|---|
| A | Gew [%] | 97,00 | 96,90 | 96,85 | 96,80 |
| C | Gew [%] | 3,00 | 3,00 | 3,00 | 3,00 |
| B | Gew [%] | | 0,10 | 0,15 | 0,20 |

| Analytik | | | | | |
|---|---|---|---|---|---|
| Gewichtsverluste: | | | | | |
| N₂ | [%] | 0,35 | 0,26 | 0,24 | 0,21 |
| Luft | [%] | 5,84 | 1,89 | 1,49 | 0,99 |
| MVR | [ml/10 min] | 3,43 | 3,2 | 3,06 | 3,02 |

| Antistatik-Messung nach 3 Tagen NK | | | | | |
|---|---|---|---|---|---|
| Delta E | [%] | 96 | 100 | 100 | 100 |
| R_{OA} | [Ω] | 2E+12 | 9E+11 | 1E+12 | 5E+11 |

**Tabelle 2**

| Beispiel | | 2 V | 4 | 5 | 6 |
|---|---|---|---|---|---|
| A | Gew [%] | 96,5 | 96,4 | 96,35 | 96,3 |
| C | Gew [%] | 3,50 | 3,50 | 3,50 | 3,50 |
| B | Gew [%] | | 0,10 | 0,15 | 0,20 |

| Analytik | | | | | |
|---|---|---|---|---|---|
| Gewichtsverluste: | | | | | |
| N₂ | [%] | 0,32 | 0,20 | 0,18 | 0,13 |
| Luft | [%] | 5,73 | 1,58 | 1,37 | 1,29 |
| MVR | [ml/10 min] | 2,8 | 2,71 | 2,84 | 2,97 |

| Antistatik-Messung nach 3 Tagen NK | | | | | |
|---|---|---|---|---|---|
| Delta E | [%] | 100 | 100 | 100 | 99 |
| R_{OA} | [Ω] | 1E+12 | 1E+12 | 1E+12 | 6E+11 |

**Tabelle 3**

| | | 3 V | 7 | 8 | 9 | 4 V |
|---|---|---|---|---|---|---|
| A | Gew [%] | 96 | 95,9 | 95,85 | 95,80 | 100,00 |
| C | Gew [%] | 4,00 | 4,00 | 4,00 | 4,00 | |
| B | Gew [%] | | 0,10 | 0, 15 | 0,20 | |

| Analytik | | | | | | |
|---|---|---|---|---|---|---|
| Gewichtsverluste: | | | | | | |
| N₂ | [%] | 0,23 | 0,18 | 0,12 | 0,17 | 0,30 |
| Luft | [%] | 3,91 | 1,66 | 1,33 | 1,17 | 3,17 |
| MVR | [ml/10 min] | 4,16 | 2,80 | 3,58 | 3,12 | 2,65 |

| Antistatik-Messung nach 3 Tagen NK | | | | | | |
|---|---|---|---|---|---|---|
| Delta E | [%] | 100 | 97 | 100 | 100 | 92 |
| R_{OA} | [Ω] | 7E+11 | 5E+11 | 5E+11 | 3E+11 | 1E+14 |

## Patentansprüche

1. Thermoplastische Formmassen, enthaltend
A) 10 bis 99,99 Gew. % mindestens eines Polyoxymethylenhomo- oder copolymerisates
B) 0,01 bis 5 Gew. % mindestens eines Polyethyleniminhomo- oder copolymerisates
C) 0,1 bis 15 Gew. % mindestens eines Polyalkylenglykols oder eines Polyalkylenglykolamins oder deren Mischungen
D) 0 bis 70 Gew. % weiterer Zusatzstoffe,
wobei die Summe der Gewichtsprozente der Komponenten A) bis D) stets 100 % ergibt.

2. Thermoplastische Formmassen nach Anspruch 1, enthaltend als Komponente B) Polyalkylenglycole der allgemeinen Formel I 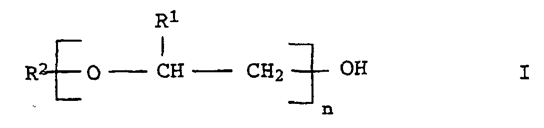 in der
R¹ Wasserstoff oder einen Alkylrest mit 1 bis 4 C-Atomen,
R² Wasserstoff oder einen Alkylrest mit 1 bis 4 C-Atomen und
n größer 2.
bedeuten.

3. Thermoplastische Formmassen nach den Ansprüchen 1 oder 2, enthaltend 0,05 bis 1 Gew % B).

4. Thermoplastische Formmassen nach den Ansprüchen 1 bis 3, enthaltend 1 bis 8 Gew % C).

5. Thermoplastische Formmassen nach den Ansprüchen 1 bis 4, wobei die Polyethylenimin-Polymerisate ausgewählt sind aus
- Homopolymeren des Ethylenimins,
- Copolymeren aus Ethylenimin und Aminen mit mindestens zwei Aminogruppen,
- vernetzten Polyethyleniminen,
- gepfropften Polyethyleniminen,
- amidierten Polymerisaten erhältlich durch Umsetzung von Polyethyleniminen mit Carbonsäuren oder Carbonsäureestern, -anhydriden, -amiden oder - halogeniden,
- alkoxylierten Polyethyleniminen,
- hydroxylgruppenhaltigen Polyethyleniminen,
- amphoteren Polyethyleniminen, und
- lipophilen Polyethyleniminen.

6. Verwendung von thermoplastischen Formmassen gemäß den Ansprüchen 1 bis 5 zur Herstellung von Formkörpern, Folien, Fasern und Schäumen.

7. Formkörper, Folien, Fasern und Schäume erhältlich aus den thermoplastischen Formmassen gemäß den Ansprüchen 1 bis 5.

## Claims

1. A thermoplastic molding composition comprising
A) from 10 to 99.99% by weight of at least one polyoxymethylene homo- or copolymer,
B) from 0.01 to 5% by weight of at least one polyethyleneimine homo- or copolymer,
C) from 0.1 to 15% by weight of at least one polyalkylene glycol or one polyalkylene glycolamine, or a mixture of these, and
D) from 0 to 70% by weight of other additives,
where the total of the percentages by weight of components A) to D) is always 100%.

2. A thermoplastic molding composition as claimed in claim 1, in which the component B) present comprises polyalkylene glycols of the formula I 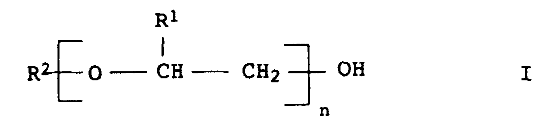 where
R¹ is hydrogen or alkyl having from 1 to 4 carbon atoms,
R² is hydrogen or alkyl having from 1 to 4 carbon atoms, and
n is greater than 2.

3. A thermoplastic molding composition as claimed in claim 1 or 2, comprising from 0.05 to 1% by weight of B).

4. A thermoplastic molding composition as claimed in any of claims 1 to 3, comprising from 1 to 8% by weight of C).

5. A thermoplastic molding composition as claimed in any of claims 1 to 4, where the polyethyleneimine polymers have been selected from
- homopolymers of ethyleneimine,
- copolymers of ethyleneimine and amines having at least two amino groups,
- crosslinked polyethyleneimines,
- grafted polyethyleneimines,
- amidated polymers obtainable by reacting polyethyleneimines with carboxylic acids or with carboxylic esters, with carboxylic anhydrides, with carboxamides, or with carbonyl halides,
- alkoxylated polyethyleneimines,
- polyethyleneimines containing hydroxyl groups,
- amphoteric polyethyleneimines, and
- lipophilic polyethyleneimines.

6. The use of a thermoplastic molding composition as claimed in any of claims 1 to 5 for producing moldings, films, fibers, or foams.

7. A molding, a film, a fiber, or a foam obtainable from a thermoplastic molding composition as claimed in any of claims 1 to 5.

## Revendications

1. Masses de moulage thermoplastiques, contenant
A) 10 à 99,99% en poids d'au moins un homopolymère ou copolymère de polyoxyméthylène,
B) 0,01 à 5% en poids d'au moins un homopolymère ou copolymère de polyéthylèneimine,
C) 0,1 à 15% en poids d'au moins un polyalkylèneglycol ou une polyalkylèneglycolamine ou de leurs mélanges,
D) 0 à 70% en poids d'autres additifs,
la somme des pour-cent en poids des composants A) à D) donnant toujours 100%.

2. Masses de moulage thermoplastiques suivant la revendication 1, contenant, comme composant B), des polyalkylèneglycols de la formule générale I : 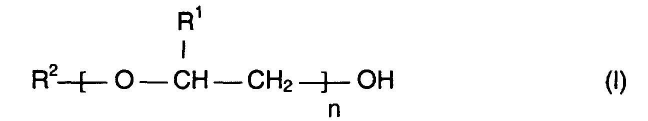 dans laquelle
R¹ représente de l'hydrogène ou un radical alkyle comportant 1 à 4 atomes de C,
R² représente de l'hydrogène ou un radical alkyle comportant 1 à 4 atomes de C, et
n est supérieur à 2.

3. Masses de moulage thermoplastiques suivant l'une des revendications 1 et 2, contenant 0,05 à 1 % en poids de B).

4. Masses de moulage thermoplastiques suivant l'une des revendications 1 à 3, contenant 1 à 8% en poids de C).

5. Masses de moulage thermoplastiques suivant l'une des revendications 1 à 4, dans lesquelles les polymères de polyéthylèneimine sont choisis parmi
- des homopolymères de l'éthylèneimine,
- des copolymères d'éthylèneimine et d'amines comportant au moins deux groupes amino,
- des polyéthylèneimines réticulées,
- des polyéthylèneimines greffées,
- des polymères amidifiés que l'on peut obtenir par réaction de polyéthylèneimines avec des acides carboxyliques ou des esters, anhydrides, amides ou halogénures d'acide carboxylique,
- des polyéthylèneimines alcoxylées,
- des polyéthylèneimines contenant des groupes hydroxyle,
- des polyéthylèneimines amphotères, et
- des polyéthylèneimines lipophiles.

6. Utilisation de masses de moulage thermoplastiques suivant l'une des revendications 1 à 5, pour la fabrication de corps façonnés, de feuilles, de fibres et de mousses.

7. Corps façonnés, feuilles, fibres et mousses que l'on peut obtenir à partir des masses de moulage thermoplastiques suivant l'une des revendications 1 à 5.
